# EUROPEAN PATENT SPECIFICATION

(11) **EP 1 730 414 B1**
(45) Date of publication and mention of the grant of the patent: **11.03.2009**
(21) Application number: 05722262.2
(22) Date of filing: 23.03.2005
(51) Int. Cl.: F16D 66/02, B60T 17/22

(54) **SENSING SYSTEM FOR A DISC BRAKE**
ERFASSUNGSSYSTEM FÜR SCHEIBENBREMSE
SYSTEME DE DETECTION POUR FREIN A DISQUE

(30) Priority: 24.03.2004 SE 0400758
(43) Date of publication of application: 13.12.2006
(73) Proprietor: Haldex Brake Products AB, 261 24 Landskrona (SE)
(72) Inventor: SEVERINSSON, Lars, S-310 21 Hishult (SE); PETTERSSON, Matti, S-254 50 Helsingborg (SE)
(74) Representative: Karlsson, Leif Gunnar Börje
(86) International application number: PCT/SE2005/000426
(87) International publication number: WO 2005/090821

(56) References cited:
- EP-A1- 0 477 519
- CA-A1- 2 237 108
- US-A- 4 345 672
- US-A- 5 189 391
- US-A- 5 975 250

## Description

### Technical Field

The present invention concerns a sensing system for the disc brakes of a vehicle. The sensing system is mainly developed for use with heavy-duty vehicles, but a person skilled in the art realises that it could be used for any type of vehicles.

Disc brakes have normally either a fixed caliper or a floating caliper. The present invention may be used with either of said types of disc brakes.

### Prior Art

Within the motor industry it is a constant struggle to reduce weight, space demand etc. of all components of the vehicles. Thus, also disc brakes should be made as small as possible.

In the past it has been normal to have a certain over-capacity regarding the stroke length of the actuator. The thought being that the actuator should have enough stroke length to guarantee that the brake is actuated. The over-capacity of the stroke length means that the actuator cylinder must also have an over-capacity. Thus, the disc brake is bigger than it should have been without the over-capacity.

US 5 975 250 shows an apparatus and a method detecting the thickness of a brake lining of a motor vehicle brake system. A brake actuator contains a hydraulic piston which is moved by an electric motor and is provided with a sensor that detects the brake pressure or brake force as well as with a further sensor that detects the travel of the hydraulic piston.

EP 477 519 shows an electric brake system. It has a self-test, for example for tightness or lining wear, which is carried out using a number of sensors and signal generators.

### Summary of the Invention

One object of the present invention is to reduce the space needed for the actuation cylinder of a disc brake. According to the present invention this is achieved by monitoring the stroke of the actuator and giving a warning if the stroke differs from a reference value. Thus, a supervision system with feedback is used. By means of the sensing system the brakes of the vehicle are checked more or less constantly during braking. Any malfunction of the brake mechanism or any other part of the brake will be detected almost immediately. The result will be a safer vehicle.

As used in this description the term "stroke" normally refers to the position of the actuator.

As a possible malfunction is detected early the over-capacity of the stroke actuator may be reduced substantially compared to existing brakes. There is no need for any major over-capacity. Put in other words the stroke length of the actuator may be decreased compared to previous systems. Thus, the length of the actuating cylinder may be reduced. As the length of the actuator cylinder may be reduced the overall dimensions of the brake may also be reduced. Brakes with reduced dimensions are more easily adapted to different vehicles.

The sensor system has at least one sensor means for each brake placed to sense, directly or indirectly, the position of a brake lever actuated by the actuator. The position of the lever is a function of the stroke of the actuator. The sensor means may also be placed to directly sense the position of the actuator as such and thus the stroke. The sensor means is normally functioning in a linear fashion, i.e. some part of it performs a linear movement, but it may also be functioning in a rotational way. Furthermore by means of one or more features correlated to the stroke, such as pressure, force, braking torque and wheel slip for the actual stroke a reference value for that stroke is calculated. The reference value is the expected value if the brake is functioning in a normal way.

The sensing system according to the present invention will give a signal if the sensed stroke of the actuator differs a pre-determined amount from the reference value. A difference exceeding the pre-determined amount is an indication on that the adjusting mechanism or any other part of the brake is malfunctioning in some way. When a signal is received that the pre-determined reference value is exceeded, a warning will immediately be given to the driver, indicating the possible malfunction of one brake and identifying said brake.

By the sensing system of the present invention each brake of the vehicle is monitored and controlled continuously. Normally a sensing cycle is run continuously during braking and, thus any problems with the brakes are immediately detected and warnings may be given. All brakes of the vehicle are normally monitored using the same control system.

According to the present invention the concept of having a rather large over-capacity of the stoke length of a brake actuator is changed into constantly monitoring the exact position of the brake actuator. Thus, avoiding the need of an over-capacity of the brake actuator.

Further objects and advantages of the present invention will be obvious for a person skilled in the art when reading the detailed description below.

### Brief Description of the Drawings

The present invention will be explained further in the detailed description below, by way of examples of preferred embodiments of the present invention, and with reference to the drawings. In the drawings:
Fig. 1 shows in sketch form one example of a disc brake having a sensor system according to the present invention,
Fig. 2 is a block diagram illustrating the operation of the sensor system of Fig. 1, and
Fig. 3 shows one example of a sensor means possible to use with the sensing system of the present invention.

### Detailed Description of Preferred Embodiments

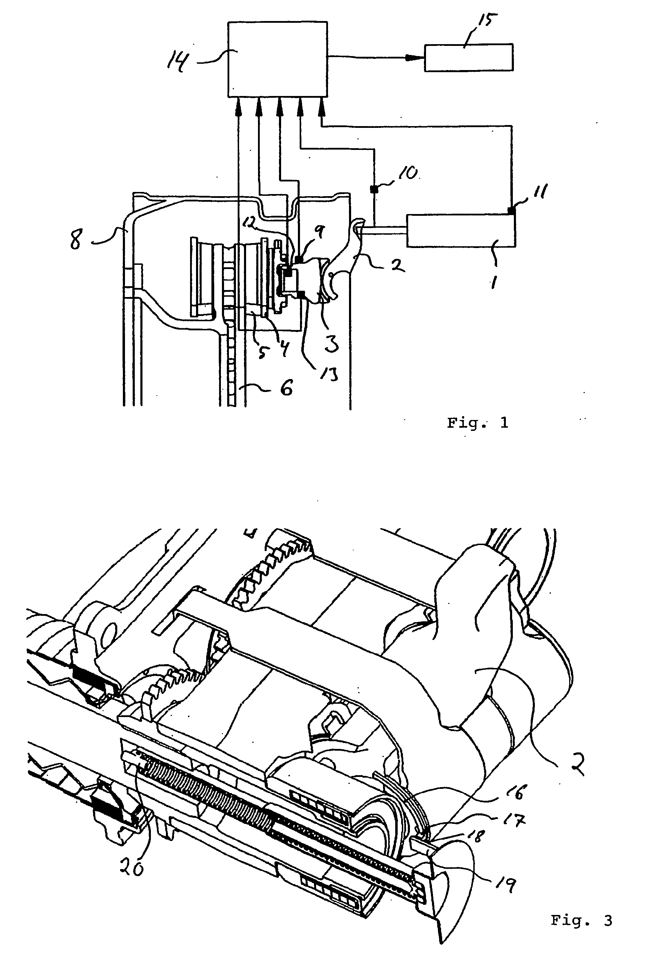

In Fig. 1 one example of a "normal" disc brake is indicated. The shown example of a disc brake has an actuator 1 acting on a brake lever 2. The movement of the actuator 1 is transferred by means of an adjusting and thrust device 3 to a back plate 4. One or more brake pads 5 are placed on the back plate 4 and will be pressed against a brake disc 6 to accomplish braking. The braking action is ultimately brought to a wheel arranged on the same axle, hub 8 etc. as the brake disc 6.

To check the function of each brake a number of sensors 9-13 may be arranged at different locations on or around the disc brake. The stroke of the brake mechanism is sensed either by a sensor 9 placed at the adjusting and thrust device 3 or a sensor 10 placed at the actuator 1. Furthermore, the pressure of the actuator 1 may be sensed by a sensor 11 at the actuator 1 or somewhere between the actuator and the pressure source, e.g. in a valve upstream from the actuator, the braking force may be sensed by a sensor 12 at the adjusting and thrust device 3 and/or the brake torque may be sensed by a sensor 13 at the adjusting and thrust device 3. The stroke sensor may be functioning in a linear or rotational fashion. A person skilled in the art realises that there are a number of alternative sensors possible to use for sensing different conditions of the disc brake.

The signals of the sensors 9-13 are given to a processing unit (CPU) 14. In the CPU 14 the received signals are processed and if necessary a warning signal is issued to a display 15 or any other suitable means. The CPU 14 may be an existing CPU of the vehicle or a CPU only used for the braking system. As used in this description the term "CPU" should be construed broadly. A person skilled in the art realises that any logic elements may be used even if they normally are not referred to as CPU. Such further logic elements may be logical gates, PLD, CPLD or FPGA. The logic circuit may be based on both electrical, light, fluid signals etc.

By sensing the stroke and one or more further features correlated with the stroke it is possible to establish if the stroke is within the allowable limits. In a brake there is always some elasticity, in e.g. the brake mechanism, the caliper or the brake pads 5. The elasticity of the brake pads is further a function of wear and temperature. By sensing both the stroke and the correlated feature(s) a reference value for the expected stroke may be established, taking the elasticity of the brake into account. The correlated feature may be one or more of the pressure of the actuator 1, the braking force, the braking torque, the pad wear or the wheel speed, indicating possible slip. These correlated features may be sensed by one of the indicated sensors 9-13, or by any other means. The pressure may also be used to calculate the force applied.

In practice each stroke value should ideally correspond to a value of the correlated feature(s), irrespectively if it is a pressure, force, torque or something else. Thus, the correlated value(s) is a function of inter alia the stroke but the ideal value will vary depending on the specific conditions regarding wear of the brake pads, temperatures etc. Therefore, the changing value has to be taken account for by the CPU 14. During a sensing cycle the correlated feature or features are used to calculate an ideal value, taken the specific conditions into account, and the sensed stroke is compared to said ideal value of the stroke. As stated above a warning signal will then be given if the difference between the sensed and the expected value exceeds a pre-determined value.

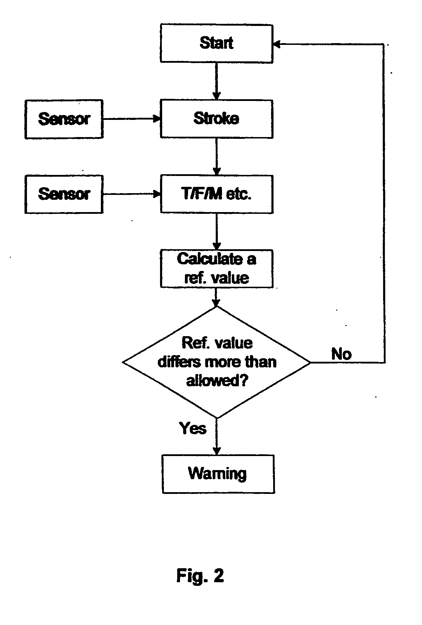

In Fig. 2 a sensing cycle is shown in a general form in a block diagram. As indicated in the block diagram the sensing system may function in the following way. First the values of a sensed stroke and at least one correlated feature are registered. Then a reference value or ideal value is calculated and compared with said registered values. In calculating the reference value a number of further factors can be taken into account, such as the temperature of the brake pads, the wear of the pads etc. The temperature may be sensed or calculated based on available information such as pad wear, number and length of brake applications, temperature of environment etc.

The reference value is the value received with normally functioning brakes, taken into account the further factors. The reference value will change depending on these further factors and, thus, the reference value is a function of said further factors. If the registered value differs more than a pre-determined amount from the reference value a warning signal is issued. If the difference is less than the pre-determined amount a new sensing cycle will start.

The sensing cycle is normally run with short intervals during braking, e.g. every 0.01, 0.1 or 1 seconds. It is also possible to run the sensing cycle regularly when the brake is not applied, e.g. every 5 or 10 minutes.

The warning signal may be given in the form of a light, a sound and/or be shown on a display. The warning signal normally also indicates from which brake the signal originates. Thus, the driver will immediately know which brake is malfunctioning. A warning signal is given due to defects in the adjusting and thrust device or the actuator (e.g. leakage), dragging, worn brake pads, stuck valves etc.

The warning signal is an indication that something is wrong in the braking system. Thus, the normal reaction after a warning signal is to check the brake in question and repair or replace the defective part or parts.

All the brakes of the vehicle are normally checked simultaneously during braking, but it also possible to have a system where the brakes are checked one after another. In the latter case it is also possible to check some brakes more often than other brakes, depending on where the brakes are placed and thus how important the function of a particular brake is.

The signals indicating the status of each brake are feed back to the CPU 14, giving a supervision system with feedback. Normally one and the same CPU 14 is used for all brakes.

The stroke sensor may have many different embodiments. Two examples of a stroke sensor are given in our Swedish Patent Application No. 0301727-4. One of these examples is shown in Fig. 3. The sensor means shown in Fig. 3 includes both a stroke sensor and a force sensor 20. For the present invention it is mainly the stroke sensor that is of interest. In the shown embodiment a holder 16 is fixed to the lever arm 2. The holder 16 holds a magnet 17. In the shown embodiment the holder 16 has a curvature form. When the lever arm 2 is in its rest position, i.e. no braking is occurring, the magnet 17 of the holder 16 is placed adjacent and opposite a Hall effect sensor 18. The Hall effect sensor 18 is received on a printed circuit board (electronic card) 19. The printed circuit board 19 holds the logic for the Hall effect sensor 18. The position of the magnet 17 in relation to the Hall effect sensor 18 is an indication of the stroke of the actuator 1. The position of the magnet 17 is directly connected to the position of the lever 2, which position in turn is directly connected to the stroke of the actuator 1.

The sensing system may be used in the same way both for a service brake and a parking brake. Often a parking brake is placed in series or in-line with the service brake. Normally the parking brake is applied or loosened by applying a force larger than a pre-determined value by means of the actuator, as is well known by a person skilled in the art.

For service brakes a reduction of 10% of the brake stroke is achieved in one example. For parking brakes the brake torque is normally significantly lower and thus the stroke length may be reduced even further for the parking brake. Shortened stroke length of the brake actuator of both the service brake and a possible parking brake means that the overall dimension of the brake may be reduced.

In one example the maximal stroke length of the actuator for a service brake was reduced from 65 mm to 59 mm. The stroke length of the parking brake was reduced even further from the original 65 mm. As the stroke length is shortened the length of the actuation cylinder may be shortened the same amount, reducing the overall dimensions of the brake.

## Claims

1. A sensing system for a disc brake, which disc brake has an actuator (1), a lever (2), one or more adjusting and thrust devices (3), one or more back plates (4), receiving brake pads (5), and one or more brake discs (6), a sensor means (9, 10) sensing the position of an actuating stroke, a further sensor means (11-13) sensing at least one further feature of the disc brake correlated with the stroke and a means (14) comparing the value of the actuating stroke to a reference value for said sensed further feature of the brake and issuing a warning signal if the actual value of the actuation stroke deviates more than a predetermined value from the reference value, said at least one stroke sensor (9, 10), which senses the stroke directly or indirectly by being placed at an adjusting device (3) of the disc brake or at the lever (2), said correlated feature being force at the actuator (1) or the adjusting and thrust device (3), the braking torque or the slip, i.e. the speed of the wheel in relation to the speed of the vehicle.

2. The sensing system of claim 1, **characterized in that** to register slip a velocity sensor at each wheel or at least each axle is used.

3. The sensing system of claim 1, **characterized in that** the signals from the sensors (9-13) are given to a CPU (14) or other logic circuit in which the comparison is performed and which issues the warning signal.

4. The sensing system of claim 3, **characterized in that** the CPU (14) is the CPU of the vehicle or a CPU only used for the braking system.

5. The sensing system of claim 1, **characterized in that** all brakes are controlled simultaneously and constantly during braking.

6. The sensing system of claim 1, **characterized in that** the reference value is established with reference to the temperature and wear of the brake pads (5), the elasticity of the brake mechanism, including caliper and the pads, the temperature of the environment and/or the number and length of brake actions performed.

7. The sensing system of claim 6, **characterized in that** the temperature of the brake pads (5) and/or the environment is estimated.

8. The sensing system of claim 6, **characterized in that** the temperature of the brake pads (5) and/or the environment is measured.

9. The sensing system of claim 1, **characterized in that** it is incorporated in a service brake, a parking brake or a combination of service and parking brakes.

## Patentansprüche

1. Erfassungssystem für eine Scheibenbremse, wobei die Scheibenbremse einen Aktuator (1), einen Hebel (2), eine oder mehrere Einstell- und Schubeinrichtungen (3), eine oder mehrere Rückplatten (4), die Bremsbeläge (5) aufnehmen, und eine oder mehrere Bremsscheiben (6) aufweist, eine Sensoreinrichtung (9, 10), die die Position eines Betätigungsweges erfasst, eine weitere Sensoreinrichtung (11 - 13), die zumindest eine weitere mit dem Weg korrelierende Eigenschaft der Scheibenbremse erfasst, und eine Einrichtung (14), die den Wert des Betätigungsweges mit einem Referenzwert für die erfasste weitere Eigenschaft der Bremse vergleicht und ein Warnsignal ausgibt, falls der tatsächliche Wert des Betätigungsweges um mehr als einen vorgegebenen Wert von dem Referenzwert abweicht, wobei der zumindest eine Wegsensor (9, 10), der den Weg direkt oder indirekt erfasst, indem er an der Einstelleinrichtung (3) der Scheibenbremse oder an dem Hebel (2) platziert ist, wobei die korrelierende Eigenschaft Kraft an dem Aktuator (1) oder der Einstell- und Schubeinrichtung (3), das Bremsmoment oder der Schlupf, d.h. die Geschwindigkeit des Rades bezogen auf die Geschwindigkeit des Fahrzeugs, ist.

2. Erfassungssystem nach Anspruch 1, **dadurch gekennzeichnet, dass** zum Registrieren von Schlupf ein Geschwindigkeitssensor an jedem Rad oder zumindest an jeder Achse benutzt wird.

3. Erfassungssystem nach Anspruch 1, **dadurch gekennzeichnet, dass** die Signale von den Sensoren (9 - 13) an eine CPU (14) oder einen anderen logischen Schaltkreis gegeben werden, in dem der Vergleich durchgeführt wird und der das Warnsignal ausgibt.

4. Erfassungssystem nach Anspruch 3, **dadurch gekennzeichnet, dass** die CPU (14) die CPU des Fahrzeugs oder eine nur für das Bremssystem verwendete CPU ist.

5. Erfassungssystem nach Anspruch 1, **dadurch gekennzeichnet, dass** alle Bremsen gleichzeitig und konstant während des Bremsens angesteuert werden.

6. Erfassungssystem nach Anspruch 1, **dadurch gekennzeichnet, dass** der Referenzwert mit Bezug auf die Temperatur und Abnutzung der Bremsbeläge (5), die Elastizität des Bremsmechanismus, einschließlich Bremssattel und der Beläge, die Temperatur der Umgebung und/oder die Anzahl und Dauer von durchgeführten Bremsaktionen festgelegt wird.

7. Erfassungssystem nach Anspruch 6, **dadurch gekennzeichnet, dass** die Temperatur der Bremsbeläge (5) und/oder der Umgebung geschätzt wird.

8. Erfassungssystem nach Anspruch 6, **dadurch gekennzeichnet, dass** die Temperatur der Bremsbeläge (5) und/oder der Umgebung gemessen wird.

9. Erfassungssystem nach Anspruch 1, **dadurch gekennzeichnet, dass** es in einer Betriebsbremse, einer Feststellbremse oder einer Kombination von Betriebs- und Feststellbremse aufgenommen ist.

## Revendications

1. Système de détection pour un frein à disque, lequel frein à disque comporte un actionneur (1), un levier (2), un ou plusieurs dispositifs de réglage et de poussée (3), un ou plusieurs disques de fixation de frein (4), recevant des plaquettes de frein (5), et un ou plusieurs disques de frein (6), un moyen détecteur (9, 10) détectant la position d'une course d'actionnement, un moyen détecteur supplémentaire (11 à 13) détectant au moins une caractéristique supplémentaire du frein à disque corrélée avec la course et un moyen (14) comparant la valeur de la course d'actionnement à une valeur de référence pour ladite caractéristique supplémentaire détectée du frein et émettant un signal d'avertissement si la valeur réelle de la course d'actionnement dévie plus qu'une valeur prédéterminée de la valeur de référence, ledit au moins un détecteur de course (9, 10), qui détecte la course directement ou indirectement en étant placé au niveau d'un dispositif de réglage (3) du frein à disque ou au niveau du levier (2), ladite caractéristique corrélée étant la force au niveau de l'actionneur (1) ou du dispositif de réglage et de poussée (3), le couple de freinage ou le glissement, c'est-à-dire la vitesse de la roue par rapport à la vitesse du véhicule.

2. Système de détection selon la revendication 1, **caractérisé en ce que**, pour enregistrer le glissement, un détecteur de vitesse au niveau de chaque roue, ou au moins de chaque essieu, est utilisé.

3. Système de détection selon la revendication 1, **caractérisé en ce que** les signaux à partir des détecteurs (9 à 13) sont fournis à une unité centrale de traitement (14) ou un autre circuit logique dans lequel la comparaison est réalisée et qui émet le signal d'avertissement.

4. Système de détection selon la revendication 3, **caractérisé en ce que** l'unité centrale de traitement (14) est l'unité centrale de traitement du véhicule ou une unité centrale de traitement seulement utilisée pour le système de freinage.

5. Système de détection selon la revendication 1, **caractérisé en ce que** tous les freins sont contrôlés simultanément et de façon constante au cours du freinage.

6. Système de détection selon la revendication 1, **caractérisé en ce que** la valeur de référence est établie par rapport à la température et à l'usure des plaquettes de frein (5), à l'élasticité du mécanisme de frein, incluant l'étrier et les plaquettes, à la température de l'environnement et/ou au nombre et à la longueur des actions de freinage réalisées.

7. Système de détection selon la revendication 6, **caractérisé en ce que** la température des plaquettes de frein (5) et/ou de l'environnement est estimée.

8. Système de détection selon la revendication 6, **caractérisé en ce que** la température des plaquettes de frein (5) et/ou de l'environnement est mesurée.

9. Système de détection selon la revendication 1, **caractérisé en ce qu'**il est incorporé dans un frein de service, un frein de stationnement ou une combinaison de freins de service et de stationnement.
